# EUROPEAN PATENT SPECIFICATION

(11) **EP 3 363 287 B1**
(45) Date of publication and mention of the grant of the patent: **07.07.2021**
(21) Application number: 17156755.5
(22) Date of filing: 17.02.2017
(51) Int. Cl.: A01M 7/00

(54) **A BOOM APPARATUS FOR AN AGRICULTURAL SPRAYER, AN AGRICULTURAL SPRAYER AND A METHOD OF OPERATING SUCH A BOOM APPARATUS**
AUSLEGERVORRICHTUNG FÜR EIN LANDWIRTSCHAFTLICHES SPRITZGERÄT, LANDWIRTSCHAFTLICHES SPRITZGERÄT UND VERFAHREN ZUM BETREIBEN EINER ENTSPRECHENDEN AUSLEGERVORRICHTUNG
RAMPE DE PULVÉRISATION POUR UN PULVÉRISATEUR AGRICOLE, PULVÉRISATEUR AGRICOLE ET PROCÉDÉ D'OPÉRATION D'UNE TELLE RAMPE

(43) Date of publication of application: 22.08.2018
(73) Proprietor: Kverneland Group Nieuw-Vennep BV, 2153 LR Nieuw-Vennep (NL)
(72) Inventor: van der Krogt, René, 2415 BX Nieuwerbrug aan den Rijn (NL)
(74) Representative: Bittner, Thomas L.

(56) References cited:
- WO-A1-2004/089077
- FR-A1- 2 891 110
- US-A- 6 119 963
- US-A1- 2003 154 704
- US-B1- 6 293 475

## Description

The present disclosure refers to a boom apparatus for an agricultural sprayer, an agricultural sprayer, and a method for operating a boom apparatus of an agricultural sprayer.

### Background

Such technologies are applied for agricultural sprayers used for dispensing a product by means of a plurality of sprayer elements received on a boom of the agricultural sprayer. Sections of the boom may be folded and unfolded to provide an extended and a folded boom. Thereby, for example, the boom of the agricultural sprayer may be brought into an extended orientation for the operation of the agricultural sprayer on the field. The folded orientation of the boom may be chosen if the agricultural sprayer is moving on a street. Also, by folding and unfolding boom sections a working width of the agricultural sprayer may be adjusted.

Document US 6,293,475 B1 discloses a folding boom for an agricultural sprayer. The boom includes a first piece pivotally connected to a second piece. The folding boom comprises a hydraulic cylinder for hydraulically pivoting the first boom piece relative to the second boom piece between a folded orientation and an extended orientation. The hydraulic cylinder includes a cylinder portion in which a piston structure is received. The cylinder portion and the piston structure are configured to slide axially relative to one another when the first boom piece is pivoted relative to the second boom piece. The folding boom further includes an accumulator in fluid communication with the cylinder portion for accumulating hydraulic fluid when the first boom piece collides with an obstruction and is pivoted from the extended orientation toward the folded orientation. A hydraulic control system is controlling the operation of the hydraulic cylinder in different modes of operation. The hydraulic control system is in an operation mode in which a pressure source configured to provide hydraulic pressure to the hydraulic cylinder is prevented from extending or retracting the hydraulic cylinder, thereby, preventing folding or unfolding of the boom. The operation mode is to be applied when the agricultural sprayer is dispensing the product in the field. In the operation mode a bypass flow line connecting ports of the cylinder portion on both sides of the piston head is open, thereby, allowing flow of a hydraulic fluid through the bypass flow line between the two ports. Therefore, in the operation mode the hydraulic control system is always in a break-away condition allowing flow of the hydraulic fluid through the open bypass flow line. The accumulator is connected to the bypass flow line. In the break-away condition the hydraulic fluid expelled from one of the chambers in the cylinder structure is flowing through the bypass flow line to both the other chamber in the cylinder structure and the accumulator, wherein the accumulator is receiving excess displaced hydraulic fluid. After the obstacle has been bypassed, the hydraulic fluid is pushed back by the hydraulic control system toward the chamber, wherein the hydraulic fluid stored within the accumulator also flows back toward the chamber from which it was expelled before.

Document US 2003/0154704 A1 refers to brush cutting technology including a breakaway system. A single horizontal pin attaches the cutter head of a brush cutting machine to the boom and a swing tower, so that a single vertical pin can attach the tractor to the boom, the vertical pin and swing tower allowing the cutter head to have a forward and aft movement for flexibility around immovable objects. A breakaway cylinder holds the cutter head at a ninety degree angle relative to the tractor of a brush cutting machine. A control, in the form of a joystick, remotely raises and lowers the cutter head portion using a single control within the cab. A first relief valve bypasses when higher than normal hydraulic pressure is created in the breakaway cylinder and a second relief valve removes excess oil from the breakaway cylinder. A switch, in the form of a toggle switch, remotely operates the breakaway cylinder and moves the cutter head from within the cab. A method for brush cutting with a brush cutting machine having a breakaway system is also disclosed.

Document US 6,119,963 discloses a boom assembly comprising a central support, a first wing pivotably coupled to the central support so as to rotate about a first axis, a first cylinder-piston assembly having a first end pivotably coupled to the support, a second end pivotably coupled to the first wing at a first pivot point for rotation about a second axis on a first side of the first axis, and a second cylinder-piston assembly having a first end pivotably coupled to the support and a second end pivotably coupled to the first wing at a second pivot point for rotation about a third axis on a second side of the first axis.

Document WO 2004/089077 A1 discloses an agricultural crop spraying apparatus comprising a spray boom consisting of a plurality of mutually hinged boom sections, latch means controlling folding of the boom sections, and sensing means disposed along the front edge of the boom to sense contact with an obstacle, the sensing means being coupled to the latch means to allow folding of the boom sections when an obstruction is sensed.

Document FR 2 891 110 A1 refers to an assembly for connecting boom sections.

### Summary

It is an object of the present disclosure to provide a boom apparatus for an agricultural sprayer, an agricultural sprayer, and a method of operating which allow for a more simple construction of a break-away safety mechanism which still ensures reliable safety functionality under field conditions.

For solving the problem, a boom apparatus for an agricultural sprayer according to the independent claim 1 is provided. In addition, an agricultural sprayer and a method of operating a boom apparatus of an agricultural sprayer according to the claims 11 and 12, respectively, are provided. Alternative embodiments are disclosed in the pendent claims.

The pressure relief apparatus provides a simplified design of a safety mechanism ensuring a reliable break-away condition in the operation of the boom apparatus. The pressure relief apparatus is made of the pressure relief flow line and the pressure relief valve provided in a pressure relief flow line. In an embodiment, no other functional components are provided with the pressure relief apparatus.

The pressure relief valve may be provided as a check valve. When the first boom section is colliding with the obstruction, any hydraulic fluid expelled, because of pressure increase, from the one of the first and second cylinder sub-chambers is guided through the pressure relief flow line directly and exclusively to the other of the first and second cylinder sub-chambers. There is a unidirectional flow of the hydraulic fluid, because of the pressure relief valve allowing flow only in one direction.

The hydraulic cylinder is extending in case of the first boom section colliding with the obstruction.

After bypassing the obstruction, the first boom section is returned to the extended position by operating the hydraulic control system. The pressure relief flow line, again, being blocked by the pressure relief valve in such mode of unfolding. As an alternative or in addition, the first boom section may be manually pivoted by a user for returning to the extended position, such operation being a manual operation mode.

The boom may comprise one or more additional boom sections, wherein foldable connections between adjacent boom sections may be provided with a hydraulic mechanism and a pressure relief apparatus as described for the first and second boom sections. The first and second boom sections are provided as the two outward boom sections providing for the outer end of the boom.

In addition or as an alternative, the hydraulic system in combination with the pressure relief apparatus may also be applied to a connection mechanism pivotably connecting a boom section supported to a middle section which may be provided in a support frame of the agricultural machine.

Rotation for moving adjacent boom sections between a folded and an unfolded (extended) position is made possible by a mechanical connection between the adjacent boom sections as it is known as such. The mechanical connection provides for a pivot point for pivoting one of the adjacent boom sections in relation to the other one of the adjacent boom sections, thereby, allowing movement between the folded and extended positions, the extended positions comprising a (fully) unfolded position.

The pressure relief valve may be a self-actuating valve. The pressure relief valve may be free of any external control providing external control signals. Self-activating of the valve may be provided by a mechanical self-activating valve mechanism, such as a spring mechanism.

The pressure relief valve may be an adjustable valve in such a way that for the adjustable valve a plurality of different threshold pressure values can be set. The threshold pressure values may be set to a pressure value of about 10 to about 400 bar, alternatively to a pressure value of about 150 to about 250 bar, such as about 220 bar. The adjustable valve may be provided with a mechanical adjustment mechanism.

The pressure relief valve and the pressure relief flow line may be provided outside the hydraulic cylinder. The pressure relief flow line may be extending essentially in the longitudinal direction of the cylinder portion. If the first and second cylinder sub-chambers are provided in opposite end sections of the cylinder portion, the pressure relief flow line may be extending essentially over the whole length of the cylinder portion. In an alternative, the pressure relief flow line and / or the pressure relief valve may be integrated in elements of the cylinder portion such as the piston head and / or the piston rod. In this case, the (external) pressure relief flow line may be omitted.

At least one of the pressure relief valve and the pressure relief flow line may be attached to an outer surface of the hydraulic cylinder. In this or alternative embodiments, the pressure relief valve may be provided as a valve block element. At least one of the pressure relief valve and the pressure relief flow line may be supported on the outer surface of the cylinder structure, thereby, optionally providing physical contact to the outer surface of the cylinder structure.

The boom apparatus may further comprise: a first port of the first cylinder sub-chamber connected to a first control line in such a way that the hydraulic pressure from the driving source is applicable to the first cylinder sub-chamber; a second port of the first cylinder sub-chamber, the second port of the first cylinder sub-chamber being separated from the first port and connected to the pressure relief flow line; a first port of the second cylinder sub-chamber connected to a second control line in such a way that the hydraulic pressure from the driving source is applicable to the second cylinder sub-chamber; and a second port of the second cylinder sub-chamber, the second port of the second cylinder sub-chamber being separated from the first port and connected to the pressure relief flow line. The ports provided on the cylinder portion and being in fluid communication with one of the first and second cylinder sub-chambers each may be provided as a hydraulic fluid port. A connection between the port and the cylinder portion may be detachable or non-detachable. According to the alternative embodiment, for both the first and second cylinder sub-chambers the first and second ports are provided separately.

The first port of the first cylinder sub-chamber may be connected to the first control line through a first check valve, and the first port of the second cylinder sub-chamber may be connected to the second control line through a second check valve.

The first and second check valve may be provided in a double valve block integrating the first and second check valve in a single valve block.

The double valve block may be attached to or supported by the outer surface of the hydraulic cylinder. The single valve block may be provided as an integrated valve apparatus.

The pressure relief flow line may be an unbranched fluid line between the first and second cylinder sub-chambers, the unbranched fluid flow line passing through the pressure relief valve. The unbranched design of the fluid flow line, specifically, may be free of any branch fluidly connecting to a reservoir or chamber different from the volume inside the fluid flow line and the pressure relief valve.

Not according to the invention, the pressure relief valve may 'dump' the hydraulic fluid in a return line to the valve block or an oil supply reservoir from which the driving source retracts its hydraulic fluid for operating the hydraulic cylinder. In case of a trailed or carried implement, it may be provided on the tractor. The hydraulic fluid might also be returned to this reservoir through one of first and second control flow lines. In this case the first fluid port of the second fluid sub-chamber and the second fluid port of the second cylinder sub-chamber may be combined to one single port. As an alternative or in addition, the first fluid port of the first cylinder sub-chamber and the second port of the first cylinder sub-chamber are combined to one point. Then the pressure relief flow line may be provided as a branched flow line, e.g. by connecting to a T-connection on one or both ends.

In an alternative, a system may be provided, the system being configured to measure at least one of a rotation angle of the boom section pivoted, a position of the piston head, a position of the cylinder body in order to let the machine user know that the boom section is in break-out position. This can be done by a light / warning message on an operation terminal and / or sound notification.

A further step may be that the hydraulic control system reacts on the break-out position with extending the break-out position to reduce damage to the boom section even more. Also, the hydraulic control system might automatically move the boom section back to the extended/ work position.

Another additional option is that the tractor automatically slows down / stops when the machine detects by measuring boom section / cylinder angle or cylinder piston head / cylinder housing position that a boom section is in break-out position.

With regard to the agricultural sprayer and the method of operating the boom apparatus of the agricultural sprayer, the alternative embodiments described above may apply mutatis mutandis.

### Description of embodiments

Following, further details to exemplary aspects are described with reference to figures. In the figures, show:
- Fig. 1: a schematic representation of a boom of an agricultural sprayer with the boom in an extended orientation;
- Fig. 2: a schematic representation of the boom from Fig. 1 in a folded orientation;
- Fig. 3: a schematic diagram of functional components of a boom apparatus;
- Fig. 4: a schematic representation of an arrangement with a hydraulic cylinder for a boom apparatus; and
- Fig. 5: a schematic representation of the arrangement from Fig. 4 in a top view.

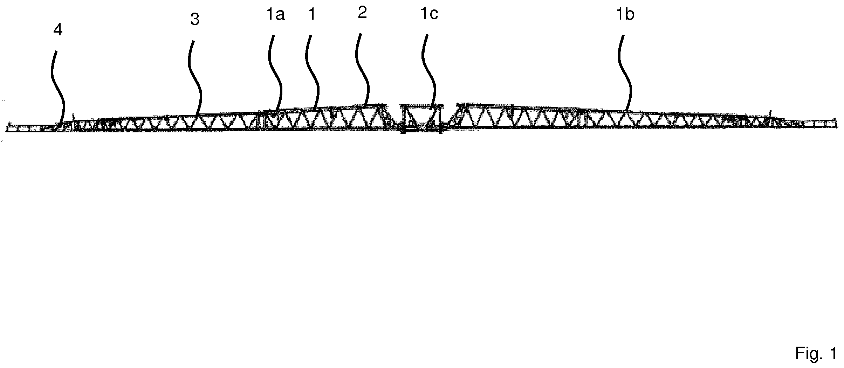

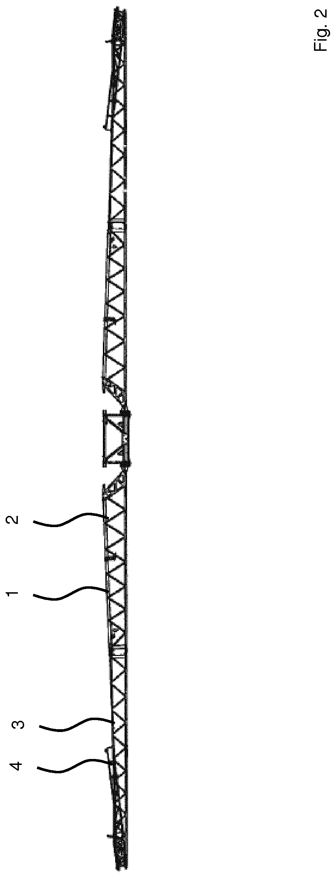

Fig. 1 and 2 show a schematic representation of a boom 1 for an agricultural sprayer in an extended orientation and a folded orientation, respectively. The boom 1 may be applied to an agricultural sprayer which in turn may be provided as an implement to be carried or trailed by a tractor or a self-driving agricultural machine. The agricultural machine is provided with a tank or reservoir containing a product to be dispensed by spraying to the field. The tank will be fluid communication with sprayer elements (not shown) provided on the boom 1.

Fig. 1 and 2 each show a rear view of the boom 1. The boom 1 comprises a plurality of boom sections 2, 3, 4 on one boom side 1a. According to the embodiment shown, there is a plurality of further boom sections on the other boom side 1b. The boom section 2 is connected to a middle (boom) section 1c.

Rotation for moving the adjacent boom sections between a folded and an unfolded (extended) position is made possible by a mechanical connection between the adjacent boom sections as it is known as such. The mechanical connection provides for a pivot point for pivoting one of the adjacent boom sections in relation to the other one of the adjacent boom sections, thereby, allowing movement between the folded and unfolded position.

With regard to the following explanation, boom sections 3, 4 are referred to as a first and second boom section, respectively. In an alternative scenario, two other boom sections, namely boom sections 2 and 3 may be referred to as a first and a second boom section.

Referring to Fig. 1, the second boom section 4 is in an unfolded position, the second boom section 4, in such orientation, extending outwardly from the first boom section 3. The unfolded position shown in Fig. 1 is one of a plurality of extended positons in which the second boom section 4 is rotated away from the folded position (see Fig. 2 below). In the different extended positons, for which Fig. 1 shows a fully extended position (unfolded position), the second boom section 4, in relation to the first boom section 3, is pivoted from the (fully) folded position (non-extended) position by different degree of rotation.

Referring to Fig. 2, the second boom section 4 is in a folded position or orientation in which the second boom section 4 is, with regard to a driving direction pivoted rearwardly. In the folded position or orientation the second boom section 4 is located adjacent to the first boom section 3.

The rotation for moving the second boom section 4 between the folded and partly or fully extended (unfolded) position is made possible by a mechanical connection between the first and second boom section 3, 4 as it is known as such. The mechanical connection provides for a pivot point for pivoting the second boom section 4 in relation to the first boom section 3, thereby, allowing movement between the folded and the plurality of extended positions of the second boom section 4.

Spraying elements (not shown) provided on the boom 1 may be operated in the different extended positions, but may also be operated in the folded position. In the latter case, spraying elements provided on the second boom section 4 may be shut-off.

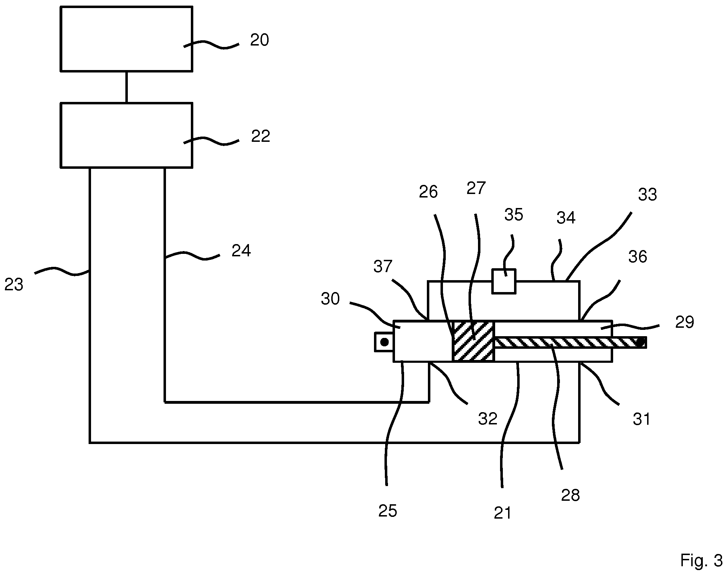

The movement of the second boom section 4 is driven by a hydraulic mechanism which is described in further details by referring to Fig. 3 showing a schematic representation of functional elements. A driving or pressure source 20 such as a hydraulic pump provides hydraulic pressure for operating a hydraulic cylinder 21. The driving source 20 and, optionally, further functional components are controlled by a hydraulic control system 22. Such additional functional components, for example, may be one or more hydraulic valves. The hydraulic cylinder 21 is connected to the hydraulic control system 22 by a first and a second control flow line 23, 24 each allowing the flow of a hydraulic fluid at least into the hydraulic cylinder 21. The hydraulic cylinder 21 comprises a cylinder portion 25 connected to one of the first and second boom sections 3, 4. Further, the hydraulic cylinder 21 is provided with a piston structure 26 connected to the other of the first and second boom sections 3, 4. The piston structure 26 comprises a piston head 27 connected to a piston rod 28. The cylinder portion 25 is defining a first and a second cylinder sub-chamber 29, 30 located on a first and a second side of the piston head 27.

The first and second control flow lines 23, 24 are connected to a first fluid port 31 of the first cylinder sub-chamber 29 and a first fluid port 32 of the second fluid sub-chamber 30, respectively. For operating the hydraulic cylinder 21 in an unfold mode in which the hydraulic pressure from the driving source 20 causes the hydraulic cylinder 21 to pivot the second boom section 4 from the folded position to the extended position and in a fold mode in which the hydraulic pressure from the driving source 20 causes the hydraulic cylinder 21 to pivot the second boom section 4 from the extended position to the folded position, under the control of the hydraulic control system 22, hydraulic fluid is provided through the first and / or the second control flow line 23, 24 to the first and / or second cylinder sub-chamber 29, 30 in the cylinder portion 25.

The arrangement shown in Fig. 3 optionally may be provided with additional functional elements such as valves. For example, both the first and second control flow line 23, 24 may be provided with a check valve.

Referring to Fig. 3, a pressure relief apparatus 33 is provided with a pressure relief flow line 34 and a pressure relief valve 35 provided in the pressure relief flow line 34. The pressure relief flow line 34 is connected to the first and second cylinder sub-chambers 29, 30 through a second port 36 of the first cylinder sub-chamber 29 and a second fluid port 37 of the second cylinder sub-chamber 30. Thereby, a direct fluid connection is provided between the first and second cylinder sub-chambers 29, 30 through the pressure relief valve 35. The pressure relief valve 35, in an operation mode of the boom apparatus, is in a normally closed or blocked condition, thereby, blocking flow of the hydraulic fluid through the pressure relief flow line 34. Such operational mode, in general, is applied when the second boom section 4 is in extended position, for example, for dispensing the product to the field.

If in such operation, when the agricultural sprayer is moving, the second boom section 4 is colliding with an obstruction, the second boom section 4 is pivoting rearwardly from the extended position (see Fig. 1) toward the folded position (see Fig. 2). This will lead to increase the pressure in the first cylinder sub-chamber 29. If such pressure is exceeding a threshold pressure, the pressure relief valve 35 will open, thereby, unblocking the pressure relief flow line 34 which allows for the hydraulic fluid flowing from the first cylinder sub-chamber 29 to the second cylinder sub-chamber 30 through the pressure relief flow line 34, the flowing hydraulic fluid passing through the open pressure relief valve 35. Thereby a break-away safety mechanism is provided with regard to the hydraulically operated connection between the first and second boom sections 3, 4.

After the obstacle has been bypassed, because of the pressure compensation between the first and second cylinder sub-chamber 29, 30, the pressure relief valve 35 will return to the closed condition (normal condition) which in it will block the pressure relief flow line 34 again. Following, the rearwardly moved second boom section 4 may be returned to the (completely) unfolded position (see Fig. 1) by manual operation and / or by actuating the hydraulic control system 22.

The pressure relief flow line 34 and / or the pressure relief valve 35 may be integrated in the elements of the cylinder portion 25 such as the piston head 27 and / or the piston rod 28. In this case, the (external) pressure relief flow line 34 may be omitted.

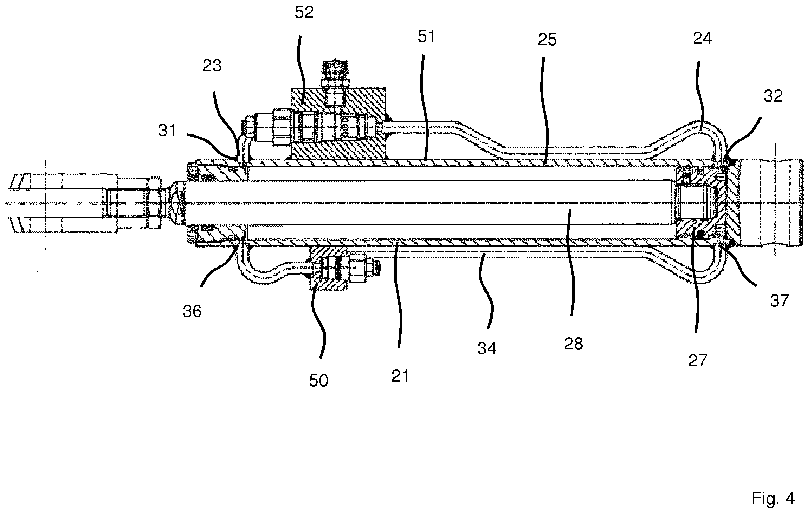

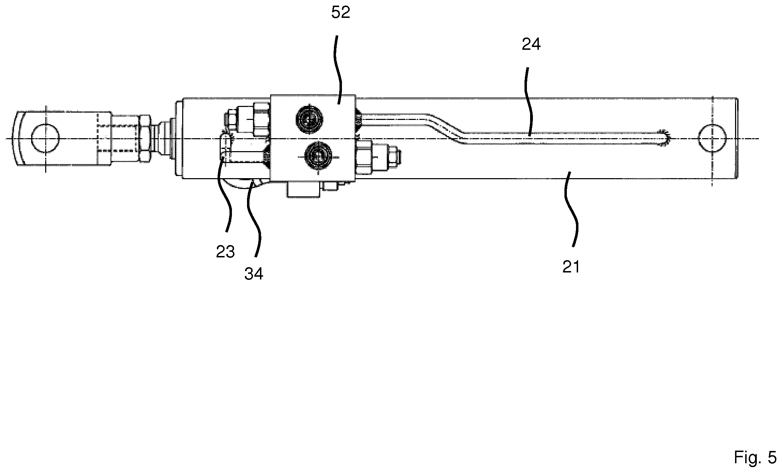

Referring to Fig. 4 and 5, a schematic representation of an exemplary embodiment of an arrangement with the hydraulic cylinder 21 is shown. In the Fig. 3 to 5 the same reference numerals are applied.

A pressure relief valve 35 is provided in a pressure relief valve block 50 supported on an outer surface 51 of the cylinder portion 25. Similarly, a single or integrated double valve block 52 is provided for the first and second control flow line 23, 24 to be connected to the driving source 20 not shown in Fig. 4 and 5. The single double valve 52 is also received on the outer surface 51 of the cylinder portion 25 on an opposite side of the cylinder portion 25. Fig. 5 shows the embodiment of the hydraulic cylinder 21 from Fig. 4 in a top view.

Not according to the invention, the pressure relief valve 35 may 'dump' the hydraulic fluid in a return line to the valve block or an oil supply reservoir from which the driving source 20 retracts its hydraulic fluid for operating the hydraulic cylinder 21. In case of a trailed or carried implement, it may be provided on the tractor. The hydraulic fluid might also be returned to this reservoir through one of first and second control flow lines 23, 24. In this case the first fluid port 32 of the second fluid sub-chamber 30 and the second fluid port 37 of the second cylinder sub-chamber 30 may be combined to one single port. As an alternative or in addition, the first fluid port 31 of the first cylinder sub-chamber 29 and the second port 36 of the first cylinder sub-chamber 29 are combined to one point. Then the pressure relief flow line 34 may be provided as a branched flow line, e.g. by connecting to a T-connection on one or both ends.

In an alternative, a system may be provided, the system being configured to measure at least one of a rotation angle of the boom section pivoted, a position of the piston head 27, a position of the cylinder body in order to let the machine user know that the boom section is in break-out position. This can be done by outputting, through an output device, a light / warning message on an operation terminal and / or sound notification.

A further step may be that the hydraulic control system reacts on the break-out position with further extending the break-out position to reduce damage to the second boom section 4 even more. Also, the hydraulic control system might automatically move the second boom section 4 pivoted because of colliding with the obstruction back to the extended position in which the boom section was positioned before collision.

Another additional option is that the tractor automatically slows down / stops when the machine detects by measuring boom section / cylinder angle or cylinder piston head / cylinder housing position that a boom section is in break-out position.

The pressure relief apparatus 33 may also be applied to a connection mechanism connecting the boom section 2 to the middle section 1c (see Fig. 1).

## Claims

1. A boom apparatus for an agricultural sprayer, comprising
- a first boom section (3) of a boom (1) provided with a plurality of sprayer elements for dispensing a product;
- a second boom section (4) of the boom (1), the second boom section (4) foldably connected to the first boom section (3) in such a way that the second boom section (4) is pivotable between an extended position in which the second boom section (4) is outwardly extending from the first boom section (3) for forming an extended boom and a folded position in which the second boom section (4) is folded from the extended position in a folding direction for forming a folded boom;
- a hydraulic cylinder (21) for hydraulically pivoting the second boom section (4) between the folded position and the extended position, comprising
- a cylinder portion (25) connected to one of the first and second boom sections (3, 4); and
- a piston structure (26) connected to the other of the first and second boom sections (3, 4), the piston structure (26) comprising a piston head (27) connected to a piston rod (28), and the cylinder portion (25) defining a first cylinder sub-chamber (29) located on a first side of the piston head (27) and a second cylinder sub-chamber (30) located on a second side of the piston head (27), wherein the piston rod (28) is extending in the first cylinder sub-chamber (29);
- a driving source (20) for providing hydraulic pressure to the hydraulic cylinder (21) for pivoting the second boom section (4) between the folded position and the extended position by causing the hydraulic cylinder (21) to extend or retract;
- a hydraulic control system (22) for controlling operation of the hydraulic cylinder (21), the hydraulic control system (22) being operable in
- an unfold mode in which the hydraulic pressure from the driving source (20) causes the hydraulic cylinder (21) to pivot the second boom section (4) from the folded position to the extended position;
- a fold mode in which the hydraulic pressure from the driving source (20) causes the hydraulic cylinder (21) to pivot the second boom section (4) from the extended position to the folded position; and
- an operation mode in which the second boom section is in the extended position and the driving source (20) is prevented from retracting and / or extending the hydraulic cylinder (21); and
- a pressure relief apparatus (33), comprising
- a pressure relief flow line (34) connecting the first and second cylinder sub-chambers (29, 30); and
- a pressure relief valve (35) provided in the pressure relief flow line (34)
**characterized by** the pressure relief valve (35) being provided in the pressure relief flow line (34) in such a way that, in the operation mode,
- the pressure relief flow line (34) is in a normally blocked condition in which the pressure relief flow line (34) is blocked by the pressure relief valve (35);
- the pressure relief flow line (34) is in an open condition by the pressure relief valve (35) opening if, because of the second boom section (4) colliding with an obstruction and pivoting rearwardly from the extended position toward the folded position, a pressure in the first cylinder sub-chamber (29) is exceeding a threshold pressure, thereby, allowing a hydraulic fluid flowing through the pressure relief fluid line (34) directly from the first cylinder sub-chamber (29) to the second cylinder sub-chamber (30); and
- the pressure relief flow line (34) is returning to the normally blocked condition by the pressure relief valve (35) closing if the pressure is falling below the threshold pressure.

2. The boom apparatus of claim 1, wherein the pressure relief valve is a self-actuating valve.

3. The boom apparatus of claim 1 or 2, wherein the pressure relief valve (35) is an adjustable valve in such a way that for the adjustable valve a plurality of different threshold pressure values can be set.

4. The boom apparatus of at least one of the preceding claims, wherein the pressure relief valve (35) and the pressure relief flow line (34) are provided outside the hydraulic cylinder (21).

5. The boom apparatus of claim 4, wherein at least one of the pressure relief valve (35) and the pressure relief flow line (34) is attached to an outer surface of the hydraulic cylinder (21).

6. The boom apparatus of at least one of the preceding claims, further comprising
- a first port (31) of the first cylinder sub-chamber (29) connected to a first control line (23) in such a way that the hydraulic pressure from the driving source (20) is applicable to the first cylinder sub-chamber (29);
- a second port (36) of the first cylinder sub-chamber (29), the second port (36) of the first cylinder sub-chamber (29) being separated from the first port (31) and connected to the pressure relief flow line (34);
- a first port (32) of the second cylinder sub-chamber (30) connected to a second control line (24) in such a way that the hydraulic pressure from the driving source (20) is applicable to the second cylinder sub-chamber (30); and
- a second port (37) of the second cylinder sub-chamber (30), the second port (37) of the second cylinder sub-chamber (30) being separated from the first port (32) and connected to the pressure relief flow line (34).

7. The boom apparatus of claim 6, wherein
- the first port (31) of the first cylinder sub-chamber (29) is connected to the first control line (23) through a first check valve; and
- the first port (32) of the second cylinder sub-chamber (30) is connected to the second control line (24) through a second check valve.

8. The boom apparatus of claim 7, wherein the first and second check valve are provided in a double valve block integrating the first and second check valve in a single valve block.

9. The boom apparatus of claim 8, wherein the double valve block is attached to the outer surface of the hydraulic cylinder (21).

10. The boom apparatus of at least one of the preceding claims, wherein the pressure relief flow line (34) is an unbranched fluid line extending between the first and second cylinder sub-chambers (29, 30), the unbranched fluid flow line passing through the pressure relief valve (35).

11. An agricultural sprayer, comprising a boom apparatus of at least one of the preceding claims.

12. A method of operating a boom apparatus of an agricultural sprayer, the boom apparatus comprising
- a first boom section (3) of a boom (1) provided with a plurality of sprayer elements for dispensing a product;
- a second boom section (4) of the boom (1), the second boom section (4) foldably connected to the first boom section (3) in such a way that the second boom section (4) is pivotable between an extended position in which the second boom section (4) is outwardly extending from the first boom section (3) for forming an extended boom and a folded position in which the second boom section (4) is folded from the extended position in a folding direction for forming a folded boom;
- a hydraulic cylinder (21) for hydraulically pivoting the second boom section (4) between the folded position and the extended position, comprising
- a cylinder portion (25) connected to one of the first and second boom sections (3, 4); and
- a piston structure (26) connected to the other of the first and second boom sections (3, 4), the piston structure (26) comprising a piston head (27) connected to a piston rod (28), and the cylinder portion (25) defining a first cylinder sub-chamber (29) located on a first side of the piston head (27) and a second cylinder sub-chamber (30) located on a second side of the piston head (27), wherein the piston rod (28) is extending in the first cylinder sub-chamber (29);
- a driving source (20) for providing hydraulic pressure to the hydraulic cylinder (21) for pivoting the second boom section (4) between the folded position and the extended position by causing the hydraulic cylinder (21) to extend or retract;
- a hydraulic control system (22) for controlling operation of the hydraulic cylinder (21); and
- a pressure relief apparatus (33), comprising a pressure relief flow line (34) connecting the first and second cylinder sub-chambers (29, 30), and a pressure relief valve (35) provided in the pressure relief flow line (34);
the method comprising
- operating the hydraulic control system (21) in
- an unfold mode in which the hydraulic pressure from the driving source (20) causes the hydraulic cylinder (21) to pivot the second boom section (4) from the folded position to the extended position;
- a fold mode in which the hydraulic pressure from the driving source (20) causes the hydraulic cylinder (21) to pivot the second boom section (4) from the extended position to the folded position; and
- an operation mode in which the second boom section is in the extended position and the driving source (20) is prevented from retracting and / or extending the hydraulic cylinder (21);
**characterized by** further comprising operating the pressure relief apparatus (33), in the operation mode, to
- block the pressure relief flow line (34) in a normally blocked condition in which the pressure relief flow line (34) is blocked by the pressure relief valve (35);
- open the pressure relief flow line (34) in an open condition by the pressure relief valve (35) opening if, because of the second boom section (4) colliding with an obstruction and pivoting rearwardly from the extended position toward the folded position, a pressure in the first cylinder sub-chamber (29) is exceeding a threshold pressure, thereby, allowing a hydraulic fluid flowing through the pressure relief fluid line (34) directly from the first cylinder sub-chamber (29) to the second cylinder sub-chamber (30); and
- return the pressure relief flow line (34) to the normally blocked condition by the pressure relief valve (35) closing if the pressure is falling below the threshold pressure.

## Patentansprüche

1. Auslegervorrichtung für eine landwirtschaftliche Feldspritze, aufweisend
- einen ersten Auslegerabschnitt (3) eines Auslegers (1), welcher mit einer Mehrzahl von Sprühelementen zum Ausbringen eines Produkts versehen ist;
- einen zweiten Auslegerabschnitt (4) des Auslegers (1), wobei der zweite Auslegerabschnitt (4) klappbar auf eine solche Art und Weise mit dem ersten Auslegerabschnitt (3) verbunden ist, dass der zweite Auslegerabschnitt (4) zwischen einer ausgeklappten Position, in welcher sich der zweite Auslegerabschnitt (4) vom ersten Auslegerabschnitt (3) nach außen erstreckt, um einen verlängerten Ausleger zu bilden, und einer eingeklappten Position, in welcher der zweite Auslegerabschnitt (4) aus der ausgeklappten Position in einer Einklapprichtung zum Bilden eines eingeklappten Auslegers eingeklappt worden ist, schwenkbar ist;
- einen Hydraulikzylinder (21) zum hydraulischen Schwenken des zweiten Auslegerabschnitts (4) zwischen der eingeklappten Position und der ausgeklappten Position, aufweisend
- einen Zylinderabschnitt (25), welcher entweder mit dem ersten oder mit dem zweiten Auslegerabschnitt (3, 4) verbunden ist; und
- eine Kolbenstruktur (26), welche mit dem anderen Abschnitt aus der Gruppe umfassend den ersten und den zweiten Auslegerabschnitt (3, 4) verbunden ist, wobei die Kolbenstruktur (26) einen Kolbenkopf (27), welcher mit einer Kolbenstange (28) verbunden ist, aufweist, und der Zylinder (25) eine erste Zylinderteilkammer (29), angeordnet an einer ersten Seite des Kolbenkopfs (27), und eine zweite Zylinderteilkammer (30), angeordnet an einer zweiten Seite des Kolbenkopfs (27), definiert, wobei sich die Kolbenstange (28) in die erste Zylinderteilkammer (29) erstreckt;
- eine Antriebsquelle (20) zum Bereitstellen eines Hydraulikdrucks am Hydraulikzylinder (21), um den zweiten Auslegerabschnitt (4) zwischen der eingeklappten Position und der ausgeklappten Position zu schwenken, indem der Hydraulikzylinder (21) aufgrund des Hydraulikdrucks ausfährt oder sich einzieht;
- ein Hydrauliksteuersystem (22) zum Steuern des Betriebs des Hydraulikzylinders (21), wobei das Hydrauliksteuersystem (22) betreibbar ist in
- einem Ausklappmodus, in welchem der Hydraulikdruck von der Antriebsquelle (20) bewirkt, dass der Hydraulikzylinder (21) den zweiten Auslegerabschnitt (4) aus der eingeklappten Position in die ausgeklappte Position schwenkt;
- einem Einklappmodus, in welchem der Hydraulikdruck von der Antriebsquelle (20) bewirkt, dass der Hydraulikzylinder (21) den zweiten Auslegerabschnitt (4) aus der ausgeklappten Position in die eingeklappte Position schwenkt; und
- einem Betriebsmodus, in welchem sich der zweite Auslegerabschnitt in der ausgeklappten Position befindet, und die Antriebsquelle (20) daran gehindert wird, den Hydraulikzylinder (21) einzuziehen und/oder auszufahren; und
- eine Druckentlastungsvorrichtung (33), aufweisend
- eine Druckentlastungsströmungsleitung (34), welche die erste und die zweite Zylinderteilkammer (29, 30) miteinander verbindet; und
- ein Druckentlastungsventil (35), welches in der Druckentlastungsströmungsleitung (34) bereitgestellt ist,
**dadurch gekennzeichnet, dass** das Druckentlastungsventil (35) auf eine solche Art und Weise in der Druckentlastungsströmungsleitung (34) bereitgestellt ist, dass im Betriebsmodus
- sich die Druckentlastungsströmungsleitung (34) in einem normalerweise blockierten Zustand befindet, in welchem die Druckentlastungsströmungsleitung (34) durch das Druckentlastungsventil (35) blockiert ist;
- sich die Druckentlastungsströmungsleitung (34) durch das Öffnen des Druckentlastungsventils (35) in einem geöffneten Zustand befindet, falls dadurch, dass der zweite Auslegerabschnitt (4) mit einem Hindernis kollidiert und aus der ausgeklappten Position nach hinten zur eingeklappten Position schwenkt, ein Druck in der ersten Zylinderteilkammer (29) einen Schwellendruck übersteigt, wodurch eine Hydraulikflüssigkeit durch die Druckentlastungsströmungsleitung (34) direkt aus der erste Zylinderteilkammer (29) zur zweiten Zylinderteilkammer (30) strömen kann; und
- die Druckentlastungsströmungsleitung (34) durch das Schließen des Druckentlastungsventils (35), falls der Druck unter den Schwellendruck sinkt, in den normalerweise blockierten Zustand zurückkehrt.

2. Auslegervorrichtung nach Anspruch 1, wobei das Druckentlastungsventil ein selbstbetätigendes Ventil ist.

3. Auslegervorrichtung nach Anspruch 1 oder 2, wobei das Druckentlastungsventil (35) ein einstellbares Ventil ist, sodass eine Mehrzahl unterschiedlicher Schwellendruckwerte für das einstellbare Ventil eingestellt werden können.

4. Auslegervorrichtung nach mindestens einem der vorstehenden Ansprüche, wobei das Druckentlastungsventil (35) und die Druckentlastungsströmungsleitung (34) außerhalb des Hydraulikzylinders (21) bereitgestellt sind.

5. Auslegervorrichtung nach Anspruch 4, wobei mindestens eines des Druckentlastungsventils (35) und der Druckentlastungsströmungsleitung (34) an einer äußeren Fläche des Hydraulikzylinders (21) angebracht ist.

6. Auslegervorrichtung nach mindestens einem der vorstehenden Ansprüche, ferner aufweisend
- einen ersten Anschluss (31) der ersten Zylinderteilkammer (29), welcher auf eine solche Art und Weise mit einer ersten Steuerleitung (23) verbunden ist, dass der Hydraulikdruck von der Antriebsquelle (20) an die erste Zylinderteilkammer (29) angelegt werden kann;
- einen zweiten Anschluss (36) der ersten Zylinderteilkammer (29), wobei der zweite Anschluss (36) der ersten Zylinderteilkammer (29) vom ersten Anschluss (31) getrennt und mit der Druckentlastungsströmungsleitung (34) verbunden ist;
- einen ersten Anschluss (32) der zweiten Zylinderteilkammer (30), welcher auf eine solche Art und Weise mit einer zweiten Steuerleitung (24) verbunden ist, dass der Hydraulikdruck von der Antriebsquelle (20) an die zweite Zylinderteilkammer (30) angelegt werden kann; und
- einen zweiten Anschluss (37) der zweiten Zylinderteilkammer (30), wobei der zweite Anschluss (37) der zweiten Zylinderteilkammer (30) vom ersten Anschluss (32) getrennt und mit der Druckentlastungsströmungsleitung (34) verbunden ist.

7. Auslegervorrichtung nach Anspruch 6, wobei
- der erste Anschluss (31) der ersten Zylinderteilkammer (29) durch ein erstes Rückschlagventil mit der ersten Steuerleitung (23) verbunden ist; und
- der erste Anschluss (32) der zweiten Zylinderteilkammer (30) durch ein zweites Rückschlagventil mit der zweiten Steuerleitung (24) verbunden ist.

8. Auslegervorrichtung nach Anspruch 7, wobei das erste und das zweite Rückschlagventil in einem Doppelventilblock bereitgestellt sind, welcher das erste und das zweite Rückschlagventil in einen einzigen Ventilblock integriert.

9. Auslegervorrichtung nach Anspruch 8, wobei der Doppelventilblock an der äußeren Fläche des Hydraulikzylinders (21) angebracht ist.

10. Auslegervorrichtung nach mindestens einem der vorstehenden Ansprüche, wobei die Druckentlastungsströmungsleitung (34) eine unverzweigte Flüssigkeitsleitung ist, welche sich zwischen der ersten und der zweiten Zylinderteilkammer (29, 30) erstreckt, wobei die unverzweigte Flüssigkeitsströmungsleitung durch das Druckentlastungsventil (35) verläuft.

11. Landwirtschaftliche Feldspritze aufweisend eine Auslegervorrichtung nach mindestens einem der vorstehenden Ansprüche.

12. Verfahren zum Betreiben einer Auslegervorrichtung einer landwirtschaftlichen Feldspritze, die Auslegervorrichtung aufweisend
- einen ersten Auslegerabschnitt (3) eines Auslegers (1), welcher mit einer Mehrzahl von Sprühelementen zum Ausbringen eines Produkts versehen ist;
- einen zweiten Auslegerabschnitt (4) des Auslegers (1), wobei der zweite Auslegerabschnitt (4) klappbar auf eine solche Art und Weise mit dem ersten Auslegerabschnitt (3) verbunden ist, dass der zweite Auslegerabschnitt (4) zwischen einer ausgeklappten Position, in welcher sich der zweite Auslegerabschnitt (4) vom ersten Auslegerabschnitt (3) nach außen erstreckt, um einen verlängerten Ausleger zu bilden, sowie einer eingeklappten Position, in welcher der zweite Auslegerabschnitt (4) aus der ausgeklappten Position in einer Einklapprichtung zum Bilden eines eingeklappten Auslegers eingeklappt worden ist, schwenkbar ist;
- einen Hydraulikzylinder (21) zum hydraulischen Schwenken des zweiten Auslegerabschnitts (4) zwischen der eingeklappten Position und der ausgeklappten Position, aufweisend
- einen Zylinderabschnitt (25), welcher entweder mit dem ersten oder mit dem zweiten Auslegerabschnitt (3, 4) verbunden ist; und
- eine Kolbenstruktur (26), welche mit dem anderen Abschnitt aus der Gruppe umfassend den ersten und den zweiten Auslegerabschnitt (3, 4) verbunden ist, wobei die Kolbenstruktur (26) einen Kolbenkopf (27), welcher mit einer Kolbenstange (28) verbunden ist, aufweist, und der Zylinderabschnitt (25) eine erste Zylinderteilkammer (29), angeordnet an einer ersten Seite des Kolbenkopfs (27), und eine zweite Zylinderteilkammer (30), angeordnet an einer zweiten Seite des Kolbenkopfs (27), definiert, wobei sich die Kolbenstange (28) in die erste Zylinderteilkammer (29) erstreckt;
- eine Antriebsquelle (20) zum Bereitstellen eines Hydraulikdrucks am Hydraulikzylinder (21), um den zweiten Auslegerabschnitt (4) zwischen der eingeklappten Position und der ausgeklappten Position zu schwenken, indem der Hydraulikzylinder (21) aufgrund des Hydraulikdrucks ausfährt oder sich einzieht;
- ein Hydrauliksteuersystem (22) zum Steuern des Betriebs des Hydraulikzylinders (21); und
- eine Druckentlastungsvorrichtung (33), aufweisend eine Druckentlastungsströmungsleitung (34), welche die erste und die zweite Zylinderteilkammer (29, 30) miteinander verbindet, und ein Druckentlastungsventil (35), welches in der Druckentlastungsströmungsleitung (34) bereitgestellt ist;
das Verfahren umfassend
- Betreiben des Hydrauliksteuersystems (21) in
- einem Ausklappmodus, in welchem der Hydraulikdruck von der Antriebsquelle (20) bewirkt, dass der Hydraulikzylinder (21) den zweiten Auslegerabschnitt (4) aus der eingeklappten Position in die ausgeklappte Position schwenkt;
- einem Einklappmodus, in welchem der Hydraulikdruck von der Antriebsquelle (20) bewirkt, dass der Hydraulikzylinder (21) den zweiten Auslegerabschnitt (4) aus der ausgeklappten Position in die eingeklappte Position schwenkt; und
- einem Betriebsmodus, in welchem sich der zweite Auslegerabschnitt in der ausgeklappten Position befindet, und die Antriebsquelle (20) daran gehindert wird, den Hydraulikzylinder (21) einzuziehen und/oder auszufahren;
**dadurch gekennzeichnet, dass** es ferner das Betreiben der Druckentlastungsvorrichtung (33), im Betriebsmodus, umfasst, um
- die Druckentlastungsströmungsleitung (34) in einem normalerweise blockierten Zustand, in welchem die Druckentlastungsströmungsleitung (34) durch das Druckentlastungsventil (35) blockiert ist, zu blockieren;
- die Druckentlastungsströmungsleitung (34) in einem geöffneten Zustand durch das Öffnen des Druckentlastungsventils (35) zu öffnen, falls dadurch, dass der zweite Auslegerabschnitt (4) mit einem Hindernis kollidiert und aus der ausgeklappten Position nach hinten zur eingeklappten Position schwenkt, ein Druck in der ersten Zylinderteilkammer (29) einen Schwellendruck übersteigt, wodurch eine Hydraulikflüssigkeit durch die Druckentlastungsströmungsleitung (34) direkt aus der erste Zylinderteilkammer (29) zur zweiten Zylinderteilkammer (30) strömen kann; und
- die Druckentlastungsströmungsleitung (34) durch das Schließen des Druckentlastungsventils (35), falls der Druck unter den Schwellendruck sinkt, in den normalerweise blockierten Zustand zurückzubringen.

## Revendications

1. Appareil à potence pour un pulvérisateur agricole, comprenant :
- une première section de potence (3) d'une potence (1) dotée d'une pluralité d'éléments de pulvérisation pour distribuer un produit,
- une deuxième section de potence (4) de la potence (1), la deuxième section de potence (4) étant reliée de manière pliable à la première section de potence (3) de manière à ce que la deuxième section de potence (4) puisse pivoter entre une position dépliée où la deuxième section de potence (4) est dépliée vers l'extérieur à partir de la première section de potence (3) pour former une potence dépliée et une position pliée où la deuxième section de potence (4) est pliée à partir de la position dépliée dans une direction de pliage pour former une potence pliée ;
- un vérin hydraulique (21) pour faire pivoter hydrauliquement la deuxième section de potence (4) entre la position pliée et la position dépliée, comprenant
- une partie de vérin (25) reliée à l'une parmi les première et deuxième sections de potence (3, 4) ; et
- une structure de piston (26) reliée à l'autre parmi les première et deuxième sections de potence (3, 4), la structure de piston (26) comprenant une tête de piston (27) reliée à une tige de piston (28), et la partie de vérin (25) définissant une première sous-chambre de vérin (29) située sur un premier côté de la tête de piston (27) et une deuxième sous-chambre de vérin (30) située sur un deuxième côté de la tête de piston (27), dans lequel la tige de piston (28) s'étend dans la première sous-chambre de vérin (29) ;
- une source de propulsion (20) pour fournir une pression hydraulique au vérin hydraulique (21) pour faire pivoter la deuxième section de potence (4) entre la position pliée et la position dépliée en faisant rentrer ou sortir le vérin hydraulique (21) ;
- un système de commande hydraulique (22) pour contrôler le fonctionnement du vérin hydraulique (21), le système de commande hydraulique (22) pouvant être exploité dans
- un mode de dépliage où la pression hydraulique de la source de propulsion (20) fait en sorte que le vérin hydraulique (21) fasse pivoter la deuxième section de potence (4) de la position pliée vers la position dépliée ;
- un mode de pliage où la pression hydraulique de la source de propulsion (20) fait en sorte que le vérin hydraulique (21) fasse pivoter la deuxième section de potence (4) de la position dépliée vers la position pliée ; et
- un mode de fonctionnement où la deuxième section de potence est dans la position dépliée et la source de propulsion (20) est empêchée de faire rentrer et/ou sortir le vérin hydraulique (21) ; et
- un appareil de décompression (33) comprenant :
- une conduite d'écoulement de décompression (34) reliant les première et deuxième sous-chambres de vérin (29, 30) ; et
- une soupape de décompression (35) fournie dans la conduite d'écoulement de décompression (34),
**caractérisé en ce que** la soupape de décompression (35) est fournie dans la conduite d'écoulement de décompression (34) de manière à ce que, dans le mode de fonctionnement,
- la conduite d'écoulement de décompression (34) est dans un état normalement bloqué où la conduite d'écoulement de décompression (34) est bloquée par la soupape de décompression (35) ;
- la conduite d'écoulement de décompression (34) est dans un état ouvert grâce à la soupape de décompression (35) qui s'ouvre si, du fait de la deuxième section de potence (4) entrant en collision avec un obstacle et pivotant vers l'arrière de la position dépliée vers la position pliée, une pression dans la première sous-chambre de vérin (29) dépasse une pression de seuil, en permettant ainsi un fluide hydraulique s'écoulant à travers la conduite d'écoulement de décompression (34), directement depuis la première sous-chambre de vérin (29) vers la deuxième sous-chambre de vérin (30) ; et
- la conduite d'écoulement de décompression (34) revient à l'état normalement bloqué grâce à la soupape de décompression (35) se fermant si la pression chute en-dessous de la pression de seuil.

2. Appareil à potence selon la revendication 1, dans lequel la soupape de décompression est une soupape à commande automatique.

3. Appareil à potence selon la revendication 1 ou 2, dans lequel la soupape de décompression (35) est une soupape réglable de manière à ce que, pour la soupape réglable, une pluralité de différentes valeurs de pression de seuil peuvent être définies.

4. Appareil à potence selon l'une au moins des revendications précédentes, dans lequel la soupape de décompression (35) et la conduite d'écoulement de décompression (34) sont fournies à l'extérieur du vérin hydraulique (21).

5. Appareil à potence selon la revendication 4, dans lequel au moins l'une parmi la soupape de décompression (35) et la conduite d'écoulement de décompression (34) est fixée à une surface extérieure du vérin hydraulique (21).

6. Appareil à potence selon l'une au moins des revendications précédentes, comprenant en outre
- un premier orifice (31) de la première sous-chambre de vérin (29) relié à une première conduite de commande (23) de manière à ce que la pression hydraulique de la source de propulsion (20) puisse être appliquée à la première sous-chambre de vérin (29) ;
- un deuxième orifice (36) de la première sous-chambre de vérin (29), le deuxième orifice (36) de la première sous-chambre de vérin (29) étant séparé du premier orifice (31) et relié à la conduite d'écoulement de décompression (34) ;
- un premier orifice (32) de la deuxième sous-chambre de vérin (30) étant relié à une deuxième conduite de commande (24) de manière à ce que la pression hydraulique de la source de propulsion (20) puisse être appliquée à la deuxième sous-chambre de vérin (30) ; et
- un deuxième orifice (37) de la deuxième sous-chambre de vérin (30), le deuxième orifice (37) de la deuxième sous-chambre de vérin (30) étant séparé du premier orifice (32) et relié à la conduite d'écoulement de décompression (34).

7. Appareil à potence selon la revendication 6, dans lequel
- le premier orifice (31) de la première sous-chambre de vérin (29) est relié à la première conduite de commande (23) via une première soupape de retenue ; et
- le premier orifice (32) de la deuxième sous-chambre de vérin (30) est relié à la deuxième conduite de commande (24) via une deuxième soupape de retenue.

8. Appareil à potence selon la revendication 7, dans lequel les première et deuxième soupapes de retenue sont fournies dans un bloc à double soupape intégrant la première et la deuxième soupape dans un seul bloc à soupape.

9. Appareil à potence selon la revendication 8, dans lequel le bloc à double soupape est fixé sur la surface extérieure du vérin hydraulique (21).

10. Appareil à potence selon l'une au moins des revendications précédentes, dans lequel la conduite d'écoulement de décompression (34) est une conduite de fluide non ramifiée s'étendant entre les première et deuxième sous-chambres de vérin (29, 30), la conduite d'écoulement de fluide non ramifiée passant par la soupape de décompression (35).

11. Pulvérisateur agricole, comprenant un appareil à potence selon l'une au moins des revendications précédentes.

12. Procédé de fonctionnement d'un appareil à potence d'un pulvérisateur agricole, l'appareil à potence comprenant :
- une première section de potence (3) d'une potence (1) dotée d'une pluralité d'éléments de pulvérisation pour distribuer un produit,
- une deuxième section de potence(4) de la potence (1), la deuxième section de potence (4) étant reliée de manière pliable à la première section de potence (3) de manière à ce que la deuxième section de potence (4) puisse pivoter entre une position dépliée où la deuxième section de potence (4) est dépliée vers l'extérieur à partir de la première section de potence (3) pour former une potence dépliée et une position pliée où la deuxième section de potence (4) est pliée à partir de la position dépliée dans une direction de pliage pour former une potence pliée ;
- un vérin hydraulique (21) pour faire pivoter hydrauliquement la deuxième section de potence (4) entre la position pliée et la position dépliée, comprenant
- une partie de vérin (25) reliée à l'une parmi les première et deuxième sections de potence (3, 4) ; et
- une structure de piston (26) reliée à l'autre parmi les première et deuxième sections de potence (3, 4), la structure de piston (26) comprenant une tête de piston (27) reliée à une tige de piston (28), et la partie de vérin (25) définissant une première sous-chambre de vérin (29) située sur un premier côté de la tête de piston (27) et une deuxième sous-chambre de vérin (30) située sur un deuxième côté de la tête de piston (27), dans lequel la tige de piston (28) s'étend dans la première sous-chambre de vérin (29) ;
- une source de propulsion (20) pour fournir une pression hydraulique au vérin hydraulique (21) pour faire pivoter la deuxième section de potence (4) entre la position pliée et la position dépliée en faisant rentrer ou sortir le vérin hydraulique (21) ;
- un système de commande hydraulique (22) pour contrôler le fonctionnement du vérin hydraulique (21) ; et
- un appareil de décompression (33) comprenant une conduite d'écoulement de décompression (34) reliant les première et deuxième sous-chambre de vérin (29, 30), et une soupape de décompression (35) fournie dans la conduite d'écoulement de décompression (34) ;
le procédé comprenant :
- l'exploitation du système de commande hydraulique (21) dans
- un mode de dépliage où la pression hydraulique de la source de propulsion (20) fait en sorte que le vérin hydraulique (21) fasse pivoter la deuxième section de potence (4) de la position pliée vers la position déplié ;
- un mode de pliage où la pression hydraulique de la source de propulsion (20) fait en sorte que le vérin hydraulique (21) fasse pivoter la deuxième section de potence (4) de la position dépliée vers la position pliée ; et
- un mode de fonctionnement où la deuxième section de potence est dans la position dépliée et la source de propulsion (20) est empêchée de faire rentrer et/ou sortir le vérin hydraulique (21) ;
**caractérisé en ce qu'**il comprend en outre l'exploitation de l'appareil de décompression (33), dans le mode de fonctionnement, pour
- bloquer la conduite d'écoulement de décompression (34) dans un état normalement bloqué où la conduite d'écoulement de décompression (34) est bloquée par la soupape de décompression (35) ;
- ouvrir la conduite d'écoulement de décompression (34) dans un état ouvert grâce à la soupape de décompression (35) qui s'ouvre si, du fait de la deuxième section de potence (4) entrant en collision avec un obstacle et pivotant en arrière depuis la position dépliée vers la position pliée, une pression dans la première sous-chambre de vérin (29) dépasse une pression de seuil, en permettant ainsi un fluide hydraulique s'écoulant à travers la conduite d'écoulement de décompression (34), directement depuis la première sous-chambre de vérin (29) vers la deuxième sous-chambre de vérin (30) ; et
- faire revenir la conduite d'écoulement de décompression (34) à l'état normalement bloqué grâce à la soupape de décompression (35) se fermant si la pression chute en-dessous de la pression de seuil.
